# EUROPEAN PATENT APPLICATION

(11) **EP 4 568 119 A1**
(43) Date of publication of application: **11.06.2025**
(21) Application number: 23851299.0
(22) Date of filing: 15.05.2023
(51) Int. Cl.: H04B 1/10

(54) **ANTI-INTERFERENCE CONTROL METHOD, ELECTRONIC DEVICE, BASE STATION, AND STORAGE MEDIUM**

(30) Priority: 08.08.2022 CN 202210942829
(71) Applicant: ZTE Corporation, Shenzhen, Guangdong 518057 (CN)
(72) Inventor: XIE, Ming, Shenzhen, Guangdong 518057 (CN); CHEN, Fang, Shenzhen, Guangdong 518057 (CN); SHI, Qiao, Shenzhen, Guangdong 518057 (CN); CHENG, Fengbo, Shenzhen, Guangdong 518057 (CN)
(74) Representative: Ziebig Hengelhaupt Intellectual Property Attorneys Patentanwaltskanzlei PartGmbB
(86) International application number: PCT/CN2023/094343
(87) International publication number: WO 2024/032069

(57) **Abstract**

The present application discloses an anti-interference control method, an electronic device, a base station, and a storage medium. The anti-interference control method comprises: if it is determined that an interference signal exists in target signals, acquiring a start frequency point and an end frequency point of the bandwidth of the interference signal (S110); and screening the target signals according to the start frequency point and the end frequency point to obtain a non-interference signal (S120).

## Description

### CROSS-REFERENCE TO RELATED APPLICATIONS

The present application is proposed based on and claims priority to the Chinese patent application No. 202210942829.8 filed on August 8, 2022, the entire content of which is incorporated herein by reference.

### TECHNICAL FIELD

The present application relates to the technical field of communications, in particular to an anti-interference control method, an electronic device, a base station, and a computer readable storage medium.

### BACKGROUND

The 700Mhz frequency band has the characteristics of wide coverage, strong penetration, and low networking cost, and is therefore known as a golden frequency band. The 700MHz frequency band specified by a 3GPP standard is originally a broadcasting and television frequency band. In some scenarios, this frequency band needs to be migrated to achieve 5G network construction and operation. Due to certain interference in broadcasting and television signals, the workload and difficulty of frequency clearing of the broadcasting and television signals are relatively high. For example, some high-power broadcast towers still occupy important frequency resources. Therefore, frequency clearing will inevitably bring about significant changes in ground analog and digital transmitters, resulting in serious broadcast blocking interference and decreased anti-interference ability.

### SUMMARY

The following is an overview of a subject described in detail herein. This overview is not intended to limit the scope of protection of the claims.

Embodiments of the present application provide an anti-interference control method, an electronic device, a base station, and a computer readable storage medium.

In a first aspect, an embodiment of the present application provides an anti-interference control method. The anti-interference control includes: acquiring a start frequency point and an end frequency point of a bandwidth of an interference signal if it is determined that the interference signal exists in target signal; and screening the target signal according to the start frequency point and the end frequency point to obtain a non-interference signal.

In a second aspect, an embodiment of the present application further provides an electronic device, including: at least one processor; and at least one memory, for storing at least one program; wherein the at least one program, when executed by the at least one processor, implements the anti-interference control method as described above.

In a third aspect, an embodiment of the present application further provides a base station, including the electronic device as described above.

In a fourth aspect, an embodiment of the present application further provides a computer readable storage medium, storing a processor executable program, wherein the processor executable program, when executed by a processor, is used to implement the anti-interference control method as described above.

Other features and advantages of the present application will be illustrated in the subsequent specification, and partially become obvious from the specification, or be known by implementing the present application. The objective and other advantages of the present application may be implemented and obtained through structures specifically pointed out in the specification, claims and accompanying drawings.

### BRIEF DESCRIPTION OF DRAWINGS

Accompanying drawings are used to provide a further understanding of the technical method of the present application, constitute a part of the specification, are used to explain the technical method of the present application together with embodiments of the present application, and do not limit the technical method of the present application.
Fig. 1 is a flowchart of an anti-interference control method provided by an embodiment of the present application.
Fig. 2 is a flowchart of acquiring a start frequency point and an end frequency point of a bandwidth of an interference signal in an anti-interference control method provided by an embodiment of the present application.
Fig. 3 is a flowchart of obtaining a non-interference signal in an anti-interference control method provided by an embodiment of the present application.
Fig. 4 is a flowchart of determining a bandwidth of a non-interference signal in an anti-interference control method provided by an embodiment of the present application.
Fig. 5 is a flowchart of filtering out an interference signal from target signal according to a bandwidth of the non-interference signal to obtain a non-interference signal in an anti-interference control method provided by another embodiment of the present application.
Fig. 6 is an interference distribution location map of an interference signal provided by an embodiment of the present application.
Fig. 7 is an interference distribution location map of an interference signal provided by another embodiment of the present application.
Fig. 8 is a flowchart after obtaining a non-interference signal in an anti-interference control method provided by an embodiment of the present application.
Fig. 9 is a flowchart of performing signal optimization on a non-interference signal in an anti-interference control method provided by an embodiment of the present application.
Fig. 10 is an execution flowchart of an anti-interference control method provided by an embodiment of the present application.
Fig. 11 is a schematic diagram of a base station for executing an anti-interference control method provided by an embodiment of the present application.
Fig. 12 is a schematic diagram of an electronic device provided by an embodiment of the present application.
Fig. 13 is a schematic diagram of a base station provided by an embodiment of the present application.

### DETAILED DESCRIPTION

To make objectives, technical methods, and advantages of the present application clearer, the following further describes the present application in detail with reference to accompanying drawings and the embodiments. It should be understood that the embodiments described here are only used to explain the present application, and are not used to limit the present application.

It should be noted that although a logical sequence is shown in the flowchart, in some cases, the steps shown or described may be executed in a sequence different from that in the flowchart. Terms such as "first" and "second" in the specification and the claims and the above accompanying drawings are used to distinguish similar objects, and are not necessarily used to describe a specific sequence or a precedence sequence.

For a problem of broadcast blocking interference, there are currently at least two mainstream solutions: interference avoidance-resource block (RB) disabling and deep filtering function. However, both of the two solutions have corresponding defects, wherein:
interference avoidance-RB disabling has a technical defect that excessive broadcast interference signal strength can lead to in-band blocking interference, so that overall uplink background noise of a base station is increased, resulting in affecting overall uplink performance; and
the deep filtering function has a technical defect that deep filtering cannot be achieved for scenarios with discontinuous interference bandwidth, resulting in loss of some uplink non-interference spectra.

Based on this, the present application provides an anti-interference control method, an electronic device, a base station, and a computer readable storage medium. The anti-interference control method in one of the embodiments includes: acquiring a start frequency point and an end frequency point of a bandwidth of an interference signal if it is determined that the interference signal exists in target signal; and obtaining a non-interference signal by screening the target signal according to the start frequency point and the end frequency point. In this embodiment, in a case of determining that the interference signal exists in the target signal, an exact location of the interference signal in the target signal is determined by acquiring the start frequency point and the end frequency point of the bandwidth of the interference signal, so that the non-interference signal can be further obtained by screening the target signal according to the start frequency point and the end frequency point, that is, deep filtering enhancement is achieved according to location characteristics of a broadcast channel spectrum to achieve a purpose of precise deep notching, so that a passband is reserved at a spectrum location of the non-interference signal, thereby reducing impact of broadcast blocking interference on other related spectra, enhancing anti-interference ability, advantageously increasing a spectrum utilization of a non-interference bandwidth and improving spectrum efficiency of the non-interference bandwidth, and thus filling the technical gap in related methods.

The embodiments of the present application are further elaborated below with reference to the accompanying drawings.

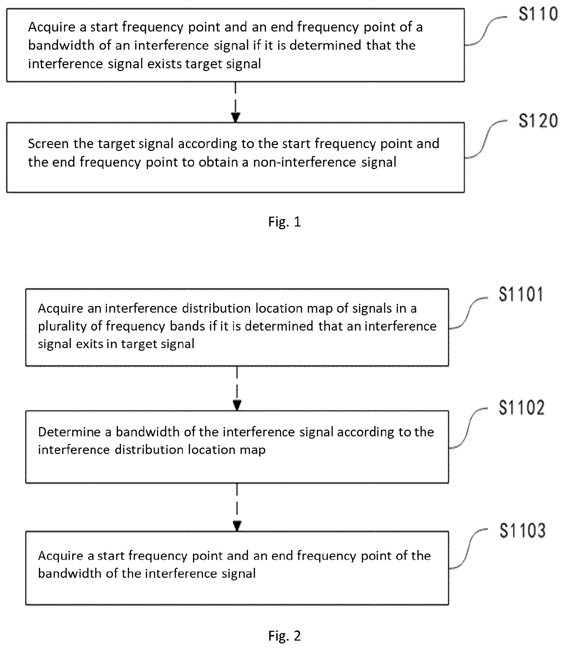

As shown in Fig. 1, Fig. 1 is a flowchart of an anti-interference control method provided by an embodiment of the present application. The anti-interference control method may include, but is not limited to steps S110 to S120.

At step S110: a start frequency point and an end frequency point of a bandwidth of an interference signal are acquired if it is determined that the interference signal exists in target signal.

At step S120: The target signal is screened according to the start frequency point and the end frequency point to obtain the non-interference signal.

In this step, in a case of determining that the interference signal exists in the target signal, an exact location of the interference signal in the target signal is determined by acquiring the start frequency point and the end frequency point of the bandwidth of the interference signal, so that the non-interference signal can be further obtained by screening the target signal according to the start frequency point and the end frequency point, that is, deep filtering enhancement is achieved according to location characteristics of a broadcast channel spectrum to achieve a purpose of precise deep notching, so that a passband is reserved at a spectrum location of the non-interference signal, thereby reducing impact of broadcast blocking interference on other related spectra, enhancing the anti-interference ability, advantageously increasing spectrum utilization of a non-interference bandwidth and improving the spectrum efficiency of the non-interference bandwidth. It has been verified that average interference improvement of the target signal in a cell can reach at least 10 dB or more.

In one embodiment, an execution subject of steps S110 to S120 is not limited and can be correspondingly set according to different application scenarios. For example, the execution subject may be, but is not limited to a wireless station that determines whether the interference signal exists in the target signal by receiving the target signal, and then executes steps S110 to S120. The wireless station may be a base station with uplink signal interference. For another example, the execution subject may be, but is not limited to an anti-interference control apparatus preset in the base station, and the anti-interference control apparatus may be used to execute the above steps S110 to S120. This will be illustrated in detail in subsequent embodiments, and will not be repeated here.

In one embodiment, the target signal may be, but is not limited to an uplink signal. That is to say, steps S110 to S120 may be, but are not limited to, applied in an uplink transmission scenario. For example, steps S110 to S120 are applied in an 8M broadcast channel to solve a problem of serious broadcast blocking interference in a target frequency band in the uplink transmission scenario of the 8M broadcast channel. However, this is not limited here, that is, those skilled in the art can further choose to detect the corresponding form of target signal according to the application scenario. The basic principle is consistent with that of steps S110 to S120, and will not be repeated here.

In one embodiment, there may be various manners for determining that the interference signal exists in the target signal, which are not limited here. For example, received spectra of the target signal may be scanned to determine whether an interference signal source exists in the target signal according to a scanning result, or location information of the interference signal source may be identified from the target signal through relevant instruments (such as a signal detector), so as to determine whether the interference signal source exists in the target signal according to a location information result obtained from the detection.

In one embodiment, the bandwidth of the interference signal may be continuous or discontinuous, both of which are applicable to steps S110 to S120. That is to say, only acquiring of the start frequency point and the end frequency point of the bandwidth of the interference signal needs to be focused on. Even if the bandwidth of the interference signal is discontinuous, implementation of steps S110 to S120 is not affected.

It can be seen that the embodiments of the present application can not only reduce the impact of broadcast blocking interference on other related spectra, enhance the anti-interference ability, and advantageously increase the spectrum utilization of the non-interference bandwidth and improving the spectrum efficiency of the non-interference bandwidth, but also can still perform deep filtering for scenarios where the interference bandwidth is discontinuous, ensuring that there is no loss of some uplink non-interference spectra.

The following implementation is given to illustrate the above embodiments.

### Implementation 1:

An uplink anti-interference scenario of broadcasting and television is taken as an example, Table 1 below shows spectrum distribution of the target signal in this scenario, and the uplink transmission rate of the target signal is affected to some extent.

**Table 1: Spectrum distribution form table of target signal in uplink anti-interference scenario of broadcasting and television**

| Channel | Frequency band/Mhz | Center frequency/Mhz |
|---|---|---|
| D37 | 702-710 | 706 |
| D38 | 710-718 | 714 |
| D39 | 718-726 | 722 |
| D40 | 726-734 | 730 |

It can be seen from Table 1 that the target signal in this scenario includes frequency bands of four channels, namely D37, D38, D39 and D40 respectively. The frequency bands are 702 Mhz-710 Mhz, 710 Mhz-718 Mhz, 718 Mhz-726 Mhz, and 726 Mhz-734 Mhz respectively, and center frequencies are 706 Mhz, 714 Mhz, 722 Mhz and 730 Mhz respectively.

Referring to Table 2, Table 2 lists various presentation forms of this scenario, or gives 16 scenarios that may have broadcast channel interference, so as to provide corresponding interference distribution location maps for filtering configuration, in particular carrier splitting screening of a cell, in subsequent steps.

**Table 2: Distribution form table of interference signal in various uplink anti-interference scenarios of broadcasting and television**

| Serial number | Sequence | D37 | D38 | D39 | D40 |
|---|---|---|---|---|---|
| 0 | 0000 | | | | |
| 1 | 1000 | X | | | |
| 2 | 0100 | | X | | |
| 3 | 0010 | | | X | |
| 4 | 0001 | | | | X |
| 5 | 1100 | X | X | | |
| 6 | 0011 | | | X | X |
| 7 | 0110 | | X | X | |
| 8 | 1010 | X | | X | |
| 9 | 1001 | X | | | X |
| 10 | 0101 | | X | | X |
| 11 | 1110 | X | X | X | |
| 12 | 0111 | | X | X | X |
| 13 | 1101 | X | X | | X |
| 14 | 1011 | X | | X | X |
| 15 | 1111 | X | X | X | X |

It can be seen from Table 2 that "X" represents an identifier where the interference signal exists, "1" in a sequence represents a frequency band where the interference signal exists, and "0" represents a frequency band where the interference signal exists. For example, a scenario "1100" with a serial number 5 represents that interference signals exist in the first two frequency bands and no interference signal exist in the last two frequency bands. In fact, there is no interference in a scenario with a serial number 0, and all frequency bands in a scenario with a serial number 15 are interfered. These two scenarios do not belong to an application environment of the embodiment of the present application, while the other 14 scenarios comply with the application environment of the embodiment of the present application. For example:

For a cell D37-D40 frequency band established after a station is built up, if there is an interference source of a scenario 2, an interference source signal at a location D38 needs to be filtered out. At this time, an actual effective uplink cell (i.e. an uplink cell corresponding to the non-interference signal) is split into two, namely D37 and D39-D40.

For the cell D37-D40 frequency band established after the station is built up, if there is an interference source in a scenario 7, the two continuous segments of interference source signals at the location D40 and a location D41 need to be filtered out. At this time, the actual uplink effective cell is split into two, namely D37 and D40.

The subsequent embodiments will provide a detailed explanation of a filtering-out process for the interference source signal above.

As shown in Fig. 2, in one embodiment of the present application, in a case where the target signal include signals in a plurality of frequency band, step S110 is further illustrated, and step S110 includes, but is not limited to steps S1101 to S1103.

At Step S1101: an interference distribution location map of the plurality of frequency band signals is acquired if it is determined that an interference signal exits in target signal.

At step S1102: the bandwidth of the interference signal is determined according to the interference distribution location map.

At step S1103: the start frequency point and the end frequency point of the bandwidth of the interference signal are acquired.

In this step, in a case of determining that the interference signal exists in the target signal, whether each frequency band is affected by the interference signal can be clarified by acquiring the interference distribution location map of the plurality of frequency band signals. At the same time, in a case of determining that a certain frequency band is affected by the interference signal, the bandwidth of the interference signal can be intuitively and effectively determined according to the interference distribution location map, so that the start frequency point and the end frequency point of the interference signal can be accurately acquired according to the determined bandwidth of the interference signal.

In one embodiment, the quantity of the frequency band signals is set according to the scenario, that is to say, the frequency band signals in different scenarios may be different, which is not limited here. For example, the scenario in the implementation 1 above includes 4 frequency band signals, but in other scenarios, there may be 5, 6, or even more or less frequency band signals.

In one embodiment, a form of the interference distribution location map is not limited, as long as the interference distribution location map can accurately characterize bandwidth information of the interference signal. On the basis of meeting this condition, those skilled in the art can choose to set the corresponding interference distribution location map according to the scenario, which will be illustrated subsequently in given embodiments, and will not be repeated here.

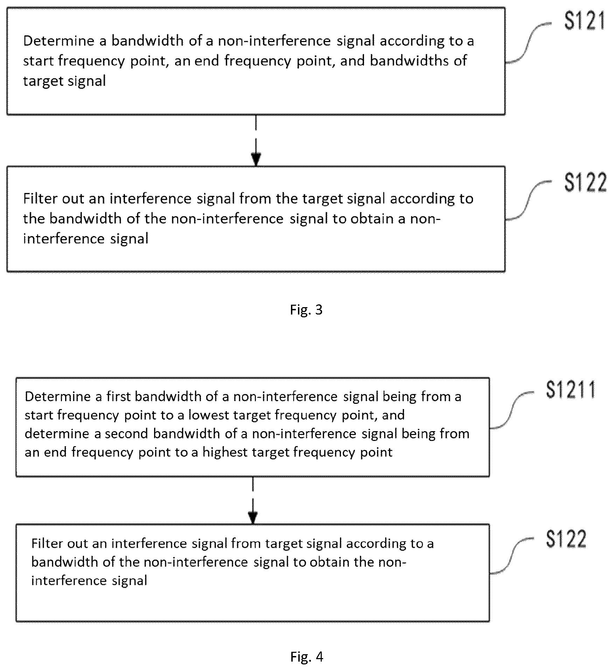

As shown in Fig. 3, in one embodiment of the present application, step S120 is further illustrated, and step S120 includes, but is not limited to steps S121 to S122.

At step S121: the bandwidth of the non-interference signal is determined according to the start frequency point, the end frequency point, and the bandwidth of the target signal.

At step S122: the interference signal is filtered out from the target signal according to the bandwidth of the non-interference signal to obtain the non-interference signal.

In this step, in a case where the bandwidth of target signal has been determined, since the start frequency point and the end frequency point can be used to determine the bandwidth of the interference signal, the bandwidth of the non-interference signal can be further accurately determined based on the bandwidth of target signal and the determined bandwidth of the interference signal, so as to obtain the non-interference signal by filtering out the interference signal from the target signal according to the bandwidth of the non-interference signal. It can be seen that the non-interference signal can be accurately screened from the target signal in this manner out, without occurring of erroneous screening.

In one embodiment, filtering out the interference signal from the target signal can be achieved in the form of a filter. Since different filter configurations can correspond to different bandwidth filtering, corresponding filter configurations can be selected in the scenario to achieve filtering of the interference signal. This will be explained in detail in the following embodiments and will not be repeated here.

Referring to Fig. 4, in one embodiment of the present application, in a case where the bandwidth of target signal is from a lowest target frequency point to a highest target frequency point, and the bandwidth of the non-interference signal includes a first bandwidth and a second bandwidth, step S121 is further illustrated, and step S121 includes, but is not limited to step S1211.

At step S1211: the first bandwidth of the non-interference signal is determined to be from the start frequency point to the lowest target frequency point, and the second bandwidth of the non-interference signal is determined to be from the end frequency point to the highest target frequency point.

In this step, the start frequency point and the end frequency point of the non-interference signal are equivalent to separating the first bandwidth and the second bandwidth of the non-interference signal. Therefore, in the case of determining that the bandwidth of target signal are from the lowest target frequency point to the highest target frequency point, it may be determined that the first bandwidth of the non-interference signal is from the start frequency point to the lowest target frequency point, and determined that the second bandwidth of the non-interference signal is from the end frequency point to the highest target frequency point. That is, the first bandwidth and the second bandwidth can be taken as two non-standard bandwidths and screened, so as to perform further signal optimization on the non-standard bandwidths in subsequent steps.

In one embodiment, the bandwidth of target signal may be predetermined, and determination manners include, but are not limited to signal measurement, bandwidth matching, etc., which are not limited here.

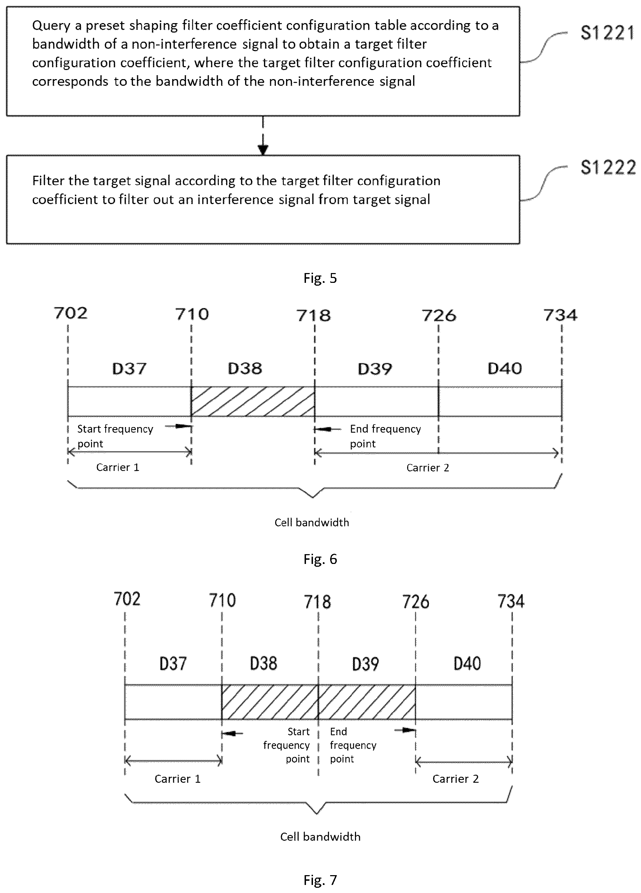

As shown in Fig. 5, in one embodiment of the present application, step S122 is further illustrated, and step S122 includes, but is not limited to steps S1221 to S1222.

At step S1221: a preset shaping filter coefficient configuration table is queried according to the bandwidth of the non-interference signal to obtain a target filter coefficient, wherein the target filter configuration coefficient corresponds to the bandwidth of the non-interference signal.

At step S1222: the target signal is filtered according to the target filter configuration coefficient to filter out the interference signal from the target signal.

In this step, by querying the preset shaping filter coefficient configuration table to obtain the target filter configuration coefficient corresponding to the bandwidth of the non-interference signal, the corresponding filtering configuration can be selected according to the target filter configuration coefficient to achieve accurate filtering of the target signal, thereby reliably obtaining the non-interference signal.

In one embodiment, if the selection is made from a shaping filter coefficient, a carrier system and a carrier bandwidth are acquired according to uplink carrier configuration information, it can be clarified that the bandwidth at this time is a non-standard bandwidth, and then the shaping filter coefficient configuration table is queried to find the corresponding configuration coefficient for filtering configuration. If the corresponding configuration coefficient is not found, configuration may be performed according to the filter coefficient under a case of a normal cell without interference, which ensures that the non-interference signal within a normal frequency band can be processed normally, as a minimum configuration during setting abnormity.

In one embodiment, in a case where the minimum configuration is performed according to the filter coefficient under the case of the normal cell without the interference, alarm prompt information may be generated and sent out to notify corresponding maintenance personnel of a failure in configured filter coefficient through the alarm prompt information, so that the maintenance personnel can further detect, adjust, and update the configured filter coefficient and other related content in the cell.

In one embodiment, the shaping filter coefficient configuration tables corresponding to different cells may be different and can be further set according to the actual network scenario, which will not be repeated here.

Another implementation is given below to illustrate the above embodiments.

### Implementation 2:

Fig. 6 and Fig. 7 respectively give two different interference distribution location maps, wherein the target signal of the cell are in D37-D40 frequency bands, and frequency bands are 702 Mhz-710 Mhz, 710 Mhz-718 Mhz, 718 Mhz-726 Mhz, and 726Mhz-734 Mhz respectively.

As shown in Fig. 6, the D38 frequency band is affected by the interference source signal, a bandwidth of the interference source signal is [710,718], that is, a start frequency point thereof is 710 and an end frequency point thereof is 718. The entire bandwidth of the current cell is known as [702,734]. At this time, carrier splitting is performed on the cell according to the following rules: (interference source high-frequency point, current cell high-frequency point] as a newly-split cell carrier 1, i.e. (718,734] as a non-standard bandwidth 1 of the newly-split cell carrier 1, and [current cell low-frequency point, interference source low-frequency point) as a newly-split cell carrier 2, i.e. (702,710] as a non-standard bandwidth 2 of the newly-split cell carrier 2.

As shown in Fig. 7, both the D38 frequency band and the D39 frequency band are affected by the interference source signal, the bandwidth of the interference source signal is [710,726], that is, a start frequency point thereof is 710 and an end frequency point thereof is 726. The entire bandwidth of the current cell is known as [702,734]. At this time, the cell is split into carriers according to the following rules: (interference source high-frequency point, current cell high-frequency point] as a newly-split cell carrier 1, i.e. (726,734] as a non-standard bandwidth 1 of the newly-split cell carrier 1, [current cell low-frequency point, interference source bottom-frequency point) as a newly-split cell carrier 2, i.e. (702,710] as a non-standard bandwidth 2 of the newly-split cell carrier 2.

It can be seen that regardless of how the interference signal changes, two segments of non-interference non-standard bandwidth signals can be determined accordingly by only determining the start frequency point and the end frequency point of the bandwidth of the interference signal. Even if the interference signal is discontinuous, for example, the bandwidth thereof is [702,710] and [718,726], the interference signal is still applicable to the screening method given in implementation 2 of the present application. It should be noted that in practical application scenarios, the bandwidth of the cell may be larger, and the frequency band of the interference source signal may also be larger. Therefore, there may be three or even more segments of non-interference signals after screening, which is also reasonable and fully applicable to the screening method given in implementation 2 of the present application.

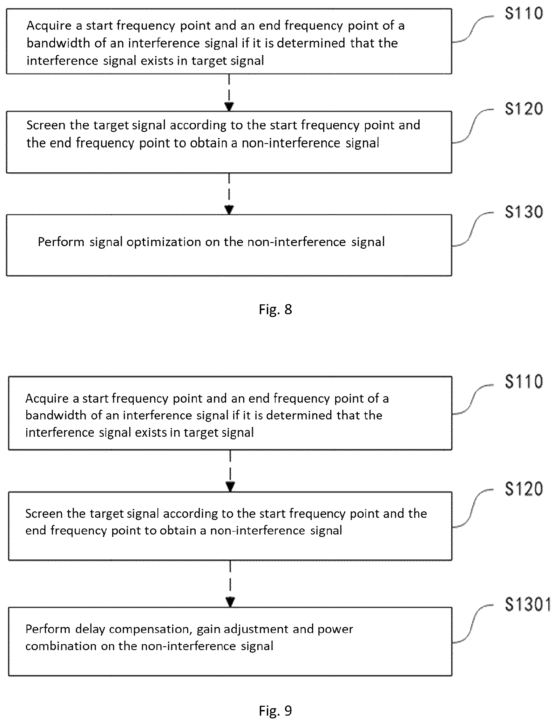

Referring to Fig. 8, in one embodiment of the present application, a step after step S120 is further illustrated, and the step after step S120 further includes, but is not limited to step S130.

Step S130: signal optimization is performed on the non-interference signal.

In this step, because the interference signal divides the target signal with the standard bandwidths into two non-standard bandwidth carriers, namely two segments of uninterfered frequency band signals, further signal optimization needs to be performed on the obtained non-interference signal, so that the non-interference signal can meet basic requirements of signal uplink in network communication, only then can the non-interference signal subjected to optimization be sent to ensure normal network communication in the cell.

In one embodiment, there can be various manners for signal optimization, and those skilled in the art can choose and set the manner according to the application scenario, which is not limited here. For example, the manner for signal optimization may include, but is not limited to one of the following:
performing delay compensation on the non-interference signal in terms of delay optimization; or
performing gain adjustment on the non-interference signal in terms of gain optimization; or
performing power combination on the non-interference signal in terms of power optimization.

Referring to Fig. 9, in one embodiment of the present application, step S130 is further illustrated, and step S130 includes, but is not limited to steps S1301.

Step S1301, delay compensation, gain adjustment and power combination are performed on the non-interference signal.

In this step, uplink data delay of the non-interference signal is ensured by performing delay compensation on the non-interference signal. Because power needs to be adjusted to fitted cell power, the relevant uplink power needs to be combined, and meanwhile, the corresponding gain is adjusted to be matched with the adjustment and improvement of the uplink power, thus achieving the overall purpose of performing signal optimization on the non-interference signal.

It should be noted that the implementation sequence of delay compensation, gain adjustment, and power combination above is not limited. In some scenarios, only one or two of these manners can be used for signal optimization, which is also in line with the requirements. For example, if the gain has been confirmed to meet the final requirements, there is no need to adjust the gain during the signal optimization process above, which is not limited in the present embodiment.

In order to more accurately illustrate the working principles of the above embodiments, another implementation is given below to illustrate the working principles and flows of the above embodiments.

### Implementation 3:

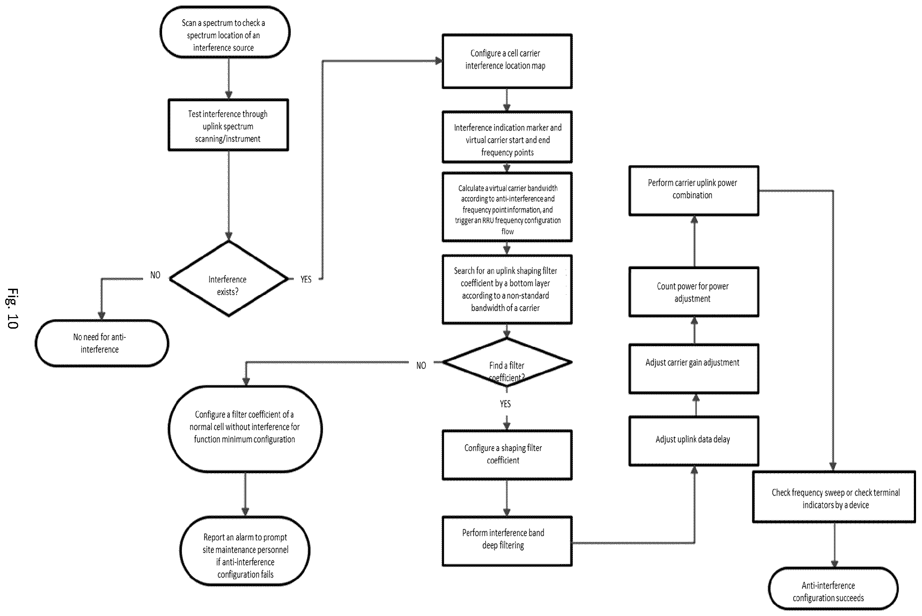

Referring to Fig. 10, Fig. 10 is an execution flowchart of an anti-interference control method provided by an embodiment of the present application. The anti-interference control method is used to perform anti-interference processing on one determined cell, including the following steps.

First, a spectrum location of an interference source is checked by scanning a received spectrum, and whether an interference signal exists is determined based on a manner of testing the interference source by uplink spectrum scanning or by an instrument, if NO, there is no need for subsequent anti-interference processing, and if YES, the next step is performed.

Then, an interference location map of a cell carrier is configured, and a bandwidth of a non-interference signal is calculated through an interference indication mark (namely a start frequency point and an end frequency point indicating the interference signal), and a start frequency point and an end frequency point of a cell carrier in the interference location map of the cell carrier.

Then, frequency configuration is triggered according to the bandwidth of the non-interference signal, that is, an uplink shaping filter coefficient is searched according to the non-standard bandwidth in the cell carrier; if the corresponding filter coefficient is not found, a normal filter coefficient in a case of non-interference is configured, function minimum configuration is performed, alarm prompt information is generated and sent out to notify corresponding maintenance personnel of a failure in filter coefficient configuration through the alarm prompt information, so that the maintenance personnel can further detect and adjust the configured filter coefficient and other related content in the cell; and if the corresponding filter coefficient is found, the next step is performed.

Then, when the corresponding filter coefficient is found, the filter coefficient is configured, and interference bandwidth deep filtering is performed based on the filter coefficient to obtain the filtered-out non-interference signal.

Then, operations such as uplink data delay adjustment, carrier gain adjustment, and power uplink combination are performed on the non-interference signal to obtain the final cell carrier.

Finally, the received spectrum of the cell carrier is scanned again to check whether the interference source has been suppressed and filtered out; and at this time, how about an improvement effect of the cell carrier may be determined by acquiring an uplink user average rate, an uplink bit error rate of a cell, and an uplink average interference level of the cell, and comparing these parameters with corresponding preset threshold parameters.

It can be seen that in a case of determining that the interference signal exists in target signal, an exact location of the interference signal in the target signal is determined by acquiring the start frequency point and the end frequency point of the bandwidth of the interference signal, so that the non-interference signal can be further obtained by screening the target signal according to the start frequency point and the end frequency point, that is, deep filtering enhancement is achieved according to location characteristics of a broadcast channel spectrum to achieve a purpose of precise deep notching, so that a passband is reserved at a spectrum location of the non-interference signal, thereby reducing impact of broadcast blocking interference on other related spectra, enhancing anti-interference ability, advantageously increasing a spectrum utilization of a non-interference bandwidth and improving spectrum efficiency of the non-interference bandwidth, and thus filling the technical gap in related methods.

In order to more accurately illustrate the working principles of the above embodiments, another implementation is given below to illustrate the working principles and flows of the above embodiments.

### Implementation 4:

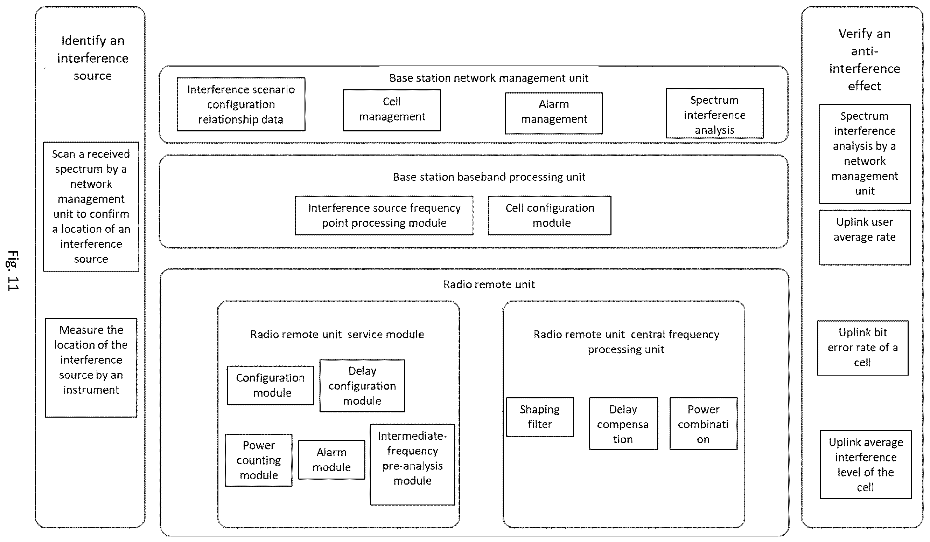

Referring to Fig. 11, Fig. 11 is a schematic diagram of a base station for executing an anti-interference control method provided by an embodiment of the present application.

As shown in Fig. 11, the base station includes a base station network management unit, a base station baseband processing unit, and a radio remote unit.

The base station network management unit is used to perform configuring interference scenario configuration relationship data, cell management, alarm management, and spectrum interference analysis.

The base station baseband processing unit includes an interference source frequency point processing module and a cell configuration module, and is used to perform interference source signal processing.

The radio remote unit is used to achieve non-interference signal acquisition and optimization, and includes a radio remote unit service module and a radio remote unit intermediate-frequency processing unit, wherein the radio remote unit service module includes a frequency configuration module, a delay configuration module, a power counting module, an alarm module, and an intermediate-frequency pre-analysis module, and the radio remote unit intermediate-frequency processing unit may be used to perform a shaping filter function, a delay compensation function, and a power combination function.

According to Table 2 in Implementation 1, interference scenario data configuration is performed on the base station network management unit. After the base station is powered on, the baseband processing unit of the base station will issue a start frequency point and an end frequency point of an interference source to the radio remote unit according to the configuration relationship data issued by the base station network management unit, so as to provide corresponding data for the radio remote unit to perform subsequent shaping filtering.

There may be at least two methods for identifying an interference source.

The first method is to find a location of the interference source through a received spectrum scanning function of the base station network management unit, and this method is convenient to operate without the need for other external devices and is recommended for use.

The second method is to identify a location of an uplink interference source through an instrument, which requires additional instrument equipment.

After the carrier is processed by the baseband processing unit, configuration information of the start frequency point and the end frequency point of the interference source is issued to the radio remote unit. At this time, an uplink signal remains unchanged in both frequency domain and time domain. After completing uplink shaping filter coefficient configuration, the radio remote unit performs shaping filtering to filter out the interference source signal, and then transmits a filtered-out digital signal to the baseband processing unit of the base station through digital down conversion to complete anti-interference.

It should be noted that this implementation is applicable to a wireless base station with uplink interference, and this method can be used for anti-interference processing both domestically and internationally to improve wireless communication quality.

Working principles of the base station are shown as follows:
step 1, server personnel scans a received spectrum according to a received spectrum scanning function of the base station network management unit to confirm whether the interference source exists.
Step 2, if the interference source exists, an interference source location map is set through a backend network management unit according to the scenarios listed in the above implementations and the location of the interference source. The purpose of this step is to inform the location of the interference source and provide a basis for subsequent filtering.
Step 3, the base station network management unit issues a filtering configuration through the baseband processing unit, mainly including the start frequency point and the end frequency point of the interference signal.
Step 4, the carrier is split according to the start frequency point and the end frequency point of the interference signal issued in step 3, as well as the entire bandwidth (the bandwidth has been determined and issued to the base station when a wireless base station is built up) of a current cell. The splitting rule is:
   within a bandwidth range of the current cell, (interference source high-frequency point, current cell high-frequency point] is used as a newly-split cell carrier 1; at this time, a carrier bandwidth of the cell is a non-standard bandwidth 1, and [current cell low-frequency point, interference source low-frequency point) is used as an original carrier 0 split from the cell and the corresponding non-standard bandwidth 0.
Step 5, an uplink frequency-configuration flow is performed, shaping filter configuration is triggered, and a shaping filter coefficient is searched in a local shaping filter configuration table of the base station according to the non-standard bandwidth based on a carrier system and a carrier bandwidth. If the configuration data is found, the uplink filter configuration is performed. If no relevant configuration data is found, minimum configuration is performed according to an original shaping filter coefficient of the cell.
Step 6, because the interference signal divides the cell with the standard bandwidth into two non-standard bandwidth carriers, namely two segments of uninterfered frequency band signals, at this time, uplink delay compensation needs to be performed on the two segments of non-interference signals, that is, delay of uplink data is ensured by performing delay compensation processing through a delay configuration module.
Step 7, power of the cell is counted through the power counting module, because the power needs to be fit into processed anti-interference cell power, power adjustment is needed, that is, gain adjustment and uplink power combination processing are achieved through the power combination module.
Step 8, the received spectrum is scanned based on the same network management operation manner as the first step, so as to check whether the interference source has been suppressed and filtered out. At this time, an improvement effect can be analyzed according to parameters such as an uplink user average rate, an uplink bit error rate of the cell, and an uplink average interference level dent of the cell.

It should be noted that in essence, for the sub-carrier combination, since the uplink carrier is split into two segments and is actually one cell, uplink received power reporting further needs to be performed according to actual uplink power of one cell. In this implementation, a carrier number of the second segment can be set as a manner of the carrier number of the first segment+fixed offset, which can be configured according to a model scenario of the base station. For example, the selected model in this implementation has a fixed offset set to be 8 offset units according to the capability of each channel of the model. Certainly, the fixed offset in other scenarios can also be set accordingly, which is not limited here.

When the shaping filter coefficient is selected, the carrier system and the carrier bandwidth are acquired according to uplink carrier configuration information, at this time, a signal bandwidth is a non-standard bandwidth, and then querying is performed according to the two-segment shaping filter coefficient configuration table. If the corresponding configuration coefficient is found, configuration is performed. If the corresponding configuration coefficient is not found, configuration is still performed according to the filter coefficient in a case of a normal cell without interference, which ensures normal processing of the non-interference signal within a normal frequency band, as a minimum configuration during setting abnormity.

It can be seen that in a case of determining that the interference signal exists in the target signal, an exact location of the interference signal in the target signal is determined by acquiring the start frequency point and the end frequency point of the bandwidth of the interference signal, so that the non-interference signal can be further obtained by screening the target signal according to the start frequency point and the end frequency point, that is, deep filtering enhancement is achieved based on location characteristics of a broadcast channel spectrum to achieve a purpose of precise deep notching, so that a passband is reserved at a spectrum location of the non-interference signal, thereby reducing impact of broadcast blocking interference on other related spectra, enhancing anti-interference ability, advantageously increasing a spectrum utilization of a non-interference bandwidth and improving spectrum efficiency of the non-interference bandwidth, and thus filling the technical gap in related methods.

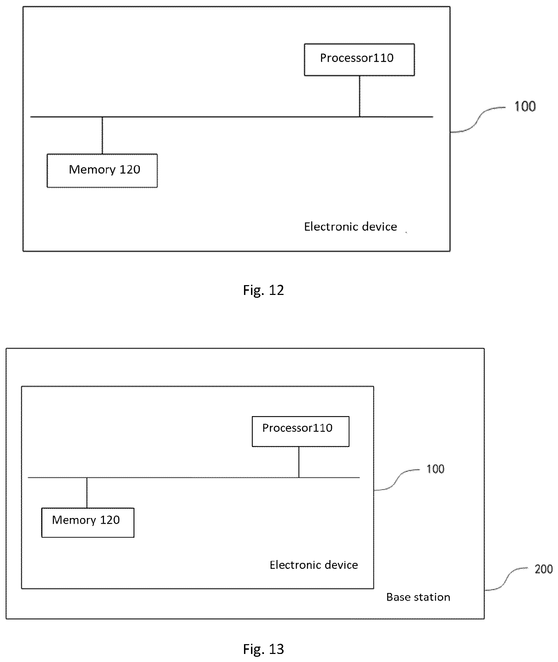

In addition, as shown in Fig. 12, one embodiment of the present application further discloses an electronic device 100, including: at least one processor 110; and at least one memory 120, for storing at least one program; wherein the at least one program, when executed by the at least one processor 110, implements the anti-interference control method in the embodiments above.

In addition, as shown in Fig. 13, one embodiment of the present application further discloses a base station 200, including an electronic device 100 as shown in Fig. 12.

In addition, one embodiment of the present application further discloses a computer readable storage medium, storing computer executable instructions, wherein the computer executable instructions are used to execute the anti-interference control method in any of the embodiments above.

In addition, one embodiment of the present application further discloses a computer program product, including a computer program or computer instructions, wherein the computer program or the computer instructions are stored in a computer readable storage medium, a processor of a computer device reads the computer program or the computer instructions from the computer readable storage medium, and the processor executes the computer program or the computer instructions, so that the computer device executes the anti-interference control method in any of the embodiments above.

In the embodiments of the present application, in the case of determining that the interference signal exists in the target signal, the exact location of the interference signal in the target signal is determined by acquiring the start frequency point and the end frequency point of the bandwidth of the interference signal, so that the non-interference signal can be further obtained by screening the target signal according to the start frequency point and the end frequency point, that is, deep filtering enhancement is achieved based on the location characteristics of the broadcast channel spectrum to achieve the purpose of precise deep notching, so that the passband is reserved at the spectrum location of the non-interference signal, thereby reducing impact of the broadcast blocking interference on other related spectra, enhancing the anti-interference ability, advantageously increasing the spectrum utilization of the non-interference bandwidth and improving the spectrum efficiency of the non-interference bandwidth, and thus filling the technical gap in the related methods.

Those ordinarily skilled in the art can understand that all or some of the steps and systems in the above disclosed methods can be implemented as software, firmware, hardware, and appropriate combinations thereof. Some or all physical components can be implemented as software executed by processors such as a central processing unit, a digital signal processor and a microprocessor, or implemented as hardware, or implemented as an integrated circuit such as an application-specific integrated circuit. Such software can be distributed on a computer readable medium, the computer readable medium may include a computer storage medium (or non-temporary media) and a communication medium (or a temporary medium). As is well known to those ordinarily skilled in the art, a term such as computer storage medium includes volatile and non-volatile, removable and non-removable media implemented in any method or technology for storing information (such as computer-readable instructions, data structures, program modules, or other data). The computer storage medium includes, but is not limited to an RAM, an ROM, an EEPROM, a flash memory or other storage technologies, a CD-ROM, a digital versatile disc (DVD) or other optical storage, a magnetic cassette, a magnetic tape, a magnetic disk storage or other magnetic storage apparatuses, or any other media that can be used to store desired information and can be accessed by a computer. In addition, it is well known to those ordinarily skilled in the art that the communication medium typically includes computer-readable instructions, data structures, program modules, or other data in modulated data signals such as a carrier or other transmission mechanisms, and may include any information delivery medium.

## Claims

1. An anti-interference control method, comprising:
acquiring, upon the condition of determining that an interference signal exists in a target signal, a start frequency point and an end frequency point of a bandwidth of the interference signal; and
screening the target signal according to the start frequency point and the end frequency point to obtain a non-interference signal.

2. The anti-interference control method according to claim 1, wherein screening the target signal according to the start frequency point and the end frequency point to obtain the non-interference signal comprises:
determining a bandwidth of the non-interference signal according to the start frequency point, the end frequency point, and a bandwidth of the target signal; and
filtering out the interference signal from the target signal according to the bandwidth of the non-interference signal to obtain the non-interference signal.

3. The anti-interference control method according to claim 2, wherein the bandwidth of the target signal is from a lowest target frequency point to a highest target frequency point, and the bandwidth of the non-interference signal comprises a first bandwidth and a second bandwidth; and
determining the bandwidth of the non-interference signal according to the start frequency point, the end frequency point, and the bandwidth of the target signal comprises:
determining the first bandwidth of the non-interference signal being from the start frequency point to the lowest target frequency point, and determining the second bandwidth of the non-interference signal being from the end frequency point to the highest target frequency point.

4. The anti-interference control method according to claim 2, wherein filtering out the interference signal from the target signal according to the bandwidth of the non-interference signal comprises:
querying, according to the bandwidth of the non-interference signal, a preset shaping filter coefficient configuration table to obtain a target filter configuration coefficient, wherein the target filter configuration coefficient corresponds to the bandwidth of the non-interference signal; and
filtering, according to the target filter configuration coefficient, the target signal, so as to filter out the interference signal from the target signal.

5. The anti-interference control method according to claim 1, wherein the target signal comprises signals in a plurality of frequency bands; and
acquiring, upon the condition of determining that the interference signal exists in the target signal, the start frequency point and the end frequency point of the bandwidth of the interference signal comprises:
acquiring, upon the condition of determining that the interference signal exists in the target signal, an interference distribution location map of the signals in the plurality of frequency bands;
determining, according to the interference distribution location map, the bandwidth of the interference signal; and
acquiring the start frequency point and the end frequency point of the bandwidth of the interference signal.

6. The anti-interference control method according to claim 1, after screening the target signal according to the start frequency point and the end frequency point to obtain the non-interference signal, further comprising:
performing signal optimization on the non-interference signal, wherein the signal optimization comprises at least one of the following:
delay compensation; or
gain adjustment; or
power combination.

7. The anti-interference control method according to claim 1, wherein determining that the interference signal exists in the target signal comprises at least one of the following:
scanning a spectrum of the target signal, and determining that the interference signal exists in the target signal; or
performing location detection on the target signal, and determining that the interference signal exists in the target signal.

8. The anti-interference control method according to any one of claims 1-7, wherein the target signal is an uplink signal.

9. An electronic device, comprising:
at least one processor; and
at least one memory, for storing at least one program; wherein
the at least one program, when executed by the at least one processor, implements the anti-interference control method according to any one of claims 1-8.

10. A base station, comprising:
the electronic device according to claim 9.

11. A computer readable storage medium, storing a processor executable program, wherein the processor executable program, when executed by a processor, is used to implement the anti-interference control method according to any one of claims 1-8.
